(19) Europäisches Patentamt
European Patent Office
Office européen des brevets

(11) Publication number: **0 236 011**
**A2**

(12) # EUROPEAN PATENT APPLICATION

(21) Application number: **87301397.3**

(22) Date of filing: **18.02.87**

(51) Int. Cl.⁴: **C 08 K 5/05**
C 08 L 29/04, C 08 J 5/18

(30) Priority: **26.02.86 JP 41114/86**
**27.12.86 JP 310205/86**

(43) Date of publication of application:
**09.09.87 Bulletin 87/37**

(84) Designated Contracting States: **DE ES FR GB IT**

(71) Applicant: **Kao Corporation**
**14-10, Nihonbashi Kayabacho 1-chome**
**Chuo-Ku Tokyo 103 (JP)**

(72) Inventor: **Aoki, Masakazu**
**2908-12, Ishimachi**
**Utsunomiya-shi Tochigi (JP)**

(74) Representative: **Bannerman, David Gardner et al**
**Withers & Rogers 4 Dyer's Buildings Holborn**
**London, EC1N 2JT (GB)**

(54) **Polyvinyl alcohol film and process for producing the same.**

(57) The invention provides a water-soluble, moistureproof film of polyvinyl alcohol comprising a polyvinyl alcohol and 5 to 20 percent by weight, based on the polyvinyl alcohol, of pentaerythritol, said film having been produced by the casting method or the melt-extrusion method using water. The film may further comprise a pentaerythritol derivative. The invention also provides a method for producing the same.

EP 0 236 011 A2

**Description**

POLYVINYL ALCOHOL FILM AND PROCESS FOR PRODUCING THE SAME

The present invention relates to a polyvinyl alcohol-based water-soluble film having superior moistureproofness.

Statement of Prior Arts

Heretofore, polyvinyl alcohol (abbreviated as PVA hereinafter) has long been in general industrial use because it is a water-soluble polymer. It finds use as a raw material of water-soluble film and gas barrier laminate film. One of the major disadvantages of PVA film is that it is poor in moistureproofness. This restricts the application area of PVA as a packaging material.

In order to solve this problem, there were proposed a variety of techniques. For example, there is disclosed in Japanese Patent Publication No. 16214/1969 a process for producing a film by reacting PVA with dextrin in the presence of borate. The film produced by this method, however, is not greatly improved in moistureproofness and is not sufficiently water-soluble in cold water. There is disclosed in Japanese Patent Publication No. 32506/1971 a process for producing terminal-alkylated PVA. The terminal alkylated PVA, however, is neither satisfactory in moistureproofness in a highly humid environment nor sufficiently water-soluble in cold water because it is of crystalline structure. There is disclosed in Japanese Patent Publication No. 18258/1971 a process for producing PVA having higher alcohol groups at terminals. The modified PVA produced by this process is not satisfactory either for reasons mentioned above.

Further Japanese patent publication A (unexamined) No. 83040/1983, corresponding to U.S. Patent No. 4,469,837, teaches a process for producing film from PVA and pentaerythritol by the non-aqueous hot melt extrusion. The reference process does not provide a good result because the extrusion is carried out at 200° c or higher and the pentaerythritol undergoes dehydration at so high a temperature, being higher than the melting point thereof.

It was moreover proposed in the state of arts that PVA was mixed with polyethylene glycol, a nonionic surface active agent or polyacrylic acid.

Summary of the invention

The invention overcomes the above shown problems and provides film of PVA with solubility in water and resistance to moisture.

The invention a water-soluble, moistureproof film of polyvinyl alcohol, which comprises a polyvinyl alcohol and 5 to 20 percent by weight, based on the polyvinyl alcohol, of pentaerythritol, said film having been produced by the casting method or the melt extrusion method using water.

The film of the invention may further comprise a pentaerythritol derivative having the formula (1) or (2) in an amount of 5 to 20 percent by weight, based on the polyvinyl alcohol, in combination with the pentaerythritol.

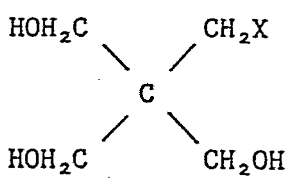

(1)

in which X is a halogen, R-COO- or -O-NO2, R being an alkyl,

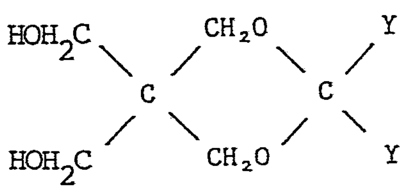

(2)

in which Y is hydrogen, an alkyl or acryl, provided that an average substitution degree in each of X and Y is 15 or less mole percent based on the hydroxyl group of the derivative.

It is preferable in the practical point of view that the melt extrusion method is carried out in the presence of 10 to 50 percent by weight, based on the total amount of the polyvinyl alcohol, the pentaerythritol and the pentaerythritol derivative, of water.

The casting method is conducted with water as a solvent.

The PVA resin that can be used in this invention includes commercial completely saponified PVA and partly saponified PVA as well as PVA derivatives such as acetalized PVA and butyralized PVA and PVA copolymers (such as vinyl alcohol-vinyl alkyl ether copolymer and vinyl alcohol-ally alcohol copolymer). In the case of PVA, one having a degree of saponification greater than 80 mol% is adequate. In the case of PVA derivatives and

PVA copolymers, those which are water-soluble are adequate. In the case of acetalized PVA, the amount of acetal should be 8 to 30 mol%, depending on the length of the alkyl chain. This holds also for the PVA copolymers. The alkyl chain preferably has 0.33 to 4.00, more preferably 1 to 4. An alkyl having more carbons than this range is not satisfactory in solubility in water. The PVA and the PVA derivative may not be limited in terms of an average molecular weight.

The pentaerythritol used in this invention is commercial one containing dipentaerythritol and/or tripentaerythritol. In the above formula (1) representing the pentaerythritol derivative, X is a halogen atom, R- $\underset{\circ}{\overset{\circ}{\vdots}}$ O-, or -O-$NO_2$, and R is an alkyl group which may has an unspecified number of carbon atoms. In the above-formula (2), Y is a hydrogen atom, or alkyl group or acyl group which may have an unspecified number of carbon atoms. As the number of carbon atoms in X and Y increases, the ratio of pentaerythritol derivative in the pentaerythritol mixture should be decreased accordingly.

In the case of pentaerythritol mixture, the ratio of pentaerythritol derivative should be such that the average degree of saturation of X and Y is less than 15 mol% based on the amount of hydroxyl groups. Outside this range, the resulting film is very poor in moistureproofness.

The adequate amount of pentaerythritol or pentaerythritol mixture is 5 to 20 wt% based on the amount of PVA resin. With less than the lower limit, the resulting film does not have sufficient waterproofness; with more than the upper limit, the resulting film is poor in not only moistureproofness but also film strength.

The PVA resin used in this invention has varied characteristic properties. Completely saponified PVA is suitable for applications where the film is required to be soluble in warm water but insoluble in cold water. Partly saponified PVA is suitable for applications where the film is required to be rapidly soluble in cold water.

If the water-soluble film of the invention is to be used for the packaging of an alkaline substance, PVA derivative (such as acetalized PVA) and PVA copolymer (such as vinyl alcohol-vinyl alkyl ester copolymer) should be selected. Partly saponified PVA is not suitable for such applications.

The water-soluble film of the invention is characterized by its contradictory property -- water-soluble and yet moistureproof. This characteristic property is obtained when PVA resin is incorporated with 5 to 20 wt% of pentaerythritol or the above-mentioned pentaerythritol mixture.

The water-soluble film of the invention can be easily produced by any conventional apparatus designed for producing PVA film by casting. It can also be produced by the aqueous melt extrusion method. In this case, the compound of PVA resin and pentaerythritol or a pentaerythritol mixture is incorporated with 10 to 50% of water, and the resulting mixture is extruded from a T-die at 100°C or below.

The water-soluble film of the invention is soluble in water and yet moistureproof. It is also resistant to acid and alkali if PVA derivative (such as acetalized PVA) or PVA copolymer (such as vinyl alcohol-vinyl alkyl ether copolymer) is used. Therefore, it will find a variety of uses as a packaging material.

[Examples]

The invention is now described in more detail with reference to the following examples and comparative examples, which are not intended to restrict the scope of the invention.

Example 1

In a 2 wt% aqueous solution of PVA (having a degree of saponification of 98.5 mol% and an average degree of polymerization of 500) was completely dissolved 5 wt% (based on PVA) of pentaerythritol. The resulting uniform solution (15 g) was cast into a glass plate measuring 10 by 10 cm. The solution was dried by heating at 95°C to give a 20 µm thick film.

Example 2

In a 2 wt% aqueous solution of partly saponified PVA (having a degree of saponification of 88.0 mol% and an average degree of polymerization of 1700) was completely dissolved 20 wt% (based on partly saponified PVA) of pentaerythritol. The resulting uniform solution (15 g) was cast onto a glass plate measuring 10 by 10 cm. The solution was dried by heating at 95°C to give a 20 µm thick film.

Example 3

In a 2 wt% aqueous solution of acetoacetalized PVA (having a degree of acetoacetalization of 22 mol% and an average degree of polymerization of 480) was completely dissolved 15 wt% (based on acetoacetalized PVA) of pentaerythritol. The resulting uniform solution (15 g) was cast onto a glass plate measuring 10 by 10 cm. The solution was dried by heating at 95°C to give a 20 µm thick film.

Example 4

In a 2 wt% aqueous solution of butyralized PVA (having a degree of butyralization of 8 mol% and an average degree of polymerization of 200) was completely dissolved 10 wt% (based on butyralized PVA) of pentaerythritol. The resulting uniform solution (15 g) was cast onto a glass plate measuring 10 by 10 cm. The solution was dried by heating at 95°C to give a 20 µm thick film.

Example 5

In a 2 wt% aqueous solution of vinyl alcohol-vinyl butyl ether copolymer (having a degree of etherification of 10 mol% and an average degree of polymerization of 1400) was completely dissolved 15 wt% (based on the

copolymer) of pentaerythritol (containing 4 wt% of dipentaerythritol and 2 wt% of tripentaerythritol). The resulting uniform solution (15 g) was cast onto a glass plate measuring 10 by 10 cm. The solution was dried by heating at 95°C to give a 20 μm thick film.

Example 6

In a 2 wt% aqueous solution of vinyl alcohol-allyl alcohol copolymer (containing 20 mol% of allyl alcohol and having an average degree of polymerization of 2200) was completely dissolved 15 wt% (based on the copolymer) of pentaerythritol. The resulting uniform solution (15 g) was cast onto a glass plate measuring 10 by 10 cm. The solution was dried by heating at 95°C to give a 20 μm thick film.

Example 7

To 850 g of acetoacetalized PVA (having a degree of acetoacetaliza tion of 22 mol% and an average degree of polymerization of 480) was added 150 g of pentaerythritol, followed by blending in a V-blender for 1 hour. The resulting mixture was further mixed with 150 g of slowly added water using a kneader to give a uniform powder. This powder was made into a 21 μm thick film by using a T-die extruder at 95°C. The film was dried at 100°C for 10 minutes to give a 20 μm thick film.

Example 8

In a 2 wt% aqueous solution of PVA (having a degree of saponification of 98.5 mol% and an average degree of polymerization of 500) was completely dissolved 10 wt% (based on PVA) of partly chlorinated pentaerythritol (Cl = 8 mol%). The resulting uniform solution (15 g) was cast onto a glass plate measuring 10 by 10 cm. The solution was dried by heating at 95°C to give a 20 μm thick film.

Example 9

In a 2 wt% aqueous solution of acetoacetalized PVA (having a degree of acetoacetalization of 22.0 mol% and an average degree of polymerization of 480) was completely dissolved 10 wt% (based on acetoacetalized PVA) of partly acetylated pentaerythritol (degree of acetylation = 5 mol%). The resulting uniform solution (15 g) was cast onto a glass plate measuring 10 by 10 cm. The solution was dried by heating at 95°C to give a 20 μm thick film.

Example 10

In a 2 wt% aqueous solution of PVA (having a degree of saponification of 98.5 mol% and an average degree of polymerization of 1700) was completely dissolved 10 wt% (based on PVA) of partly nitroesterified pentaerythritol (degree of nitroesterification = 4 mol%). The resulting uniform solution (15 g) was cast onto a glass plate measuring 10 by 10 cm. The solution was dried by heating at 95°C to give a 20 μm thick film.

Example 11

In a 2 wt% aqueous solution of PVA (having a degree of saponification of 98.5 mol% and an average degree of polymerization of 1700) was completely dissolved 10 wt% (based on PVA) of partly formalized pentaerythritol (degree of formalization = 15 mol%). The resulting uniform solution (15 g) was cast on a glass plate measuring 10 by 10 cm. The solution was dried by heating at 95°C to give a 20 μm thick film.

Example 12

In a 2 wt% aqueous solution of acetoacetalized PVA (having a degree of acetoacetalization of 22.0 mol% and an average degree of polymerization of 480) was completely dissolved 10 wt% (based on acetoacetalized PVA) of partly acetoacetalized pentaerythritol (degree of acetoacetalization = 3 mol%). The resulting uniform solution (15 g) was cast onto a glass plate measuring 10 by 10 cm. The solution was dried by heating at 95°C to give a 20 μm thick film.

Example 13

In a 2 wt% aqueous solution of PVA (having a degree of saponification of 98.5 mol% and an average of polymerization of 1700) was completely dissolved 15 wt% (based on PVA) of partly butyrate esterified pentaerythritol (degree of esterification = 4 mol%). The resulting uniform solution (15 g) was cast onto a glass plate measuring 10 by 10 cm. The solution was dried by heating at 95°C to give a 20 μm thick film.

Example 14

In a 2 wt% aqueous solution of acetoacetalized PVA (having a degree of acetoacetalization of 22.0 mol% and an average degree of polymerization of 480) was completely dissolved 15 wt% (based on acetoacetalized PVA) of partly caproate esterified pentaerythritol (degree of esterification = 3 mol%). The resulting uniform solution (15 g) was cast onto a glass plate measuring 10 by 10 cm. The solution was dried by heating at 95°C to give a 20 μm thick film.

Example 15

In a 2 wt% aqueous solution of PVA (having a degree of saponification of 98.5 mol% and an average degree of polymerization of 1700) was completely dissolved 10 wt% (based on PVA) of partly butyralized

pentaerythritol (degree of butyralization = 5 mol%). The resulting uniform solution (15 g) was cast onto a glass plate measuring 10 by 10 cm. The solution was dried by heating at 95°C to give a 20 μm thick film.

Comparative Example 1

A 2 wt% aqueous solution of PVA (having a degree of saponification of 98.5 mol% and an average degree of polymerization of 500) was prepared. This solution (15 g) was cast onto a glass plate measuring 10 by 10 cm. The solution was dried by heating at 95°C to give a 20 μm thick film.

Comparative Example 2

In a 2 wt% aqueous solution of PVA (having a degree of saponifica tion of 98.5 mol% and an average degree of polymerization of 1700) was dissolved 10 wt% (based on PVA) of glycerin. The resulting uniform solution (15 g) was cast onto a glass plate measuring 10 by 10 cm. The solution was dried by heating at 95°C to give a 20 μm thick film.

Comparative Example 3

In a 2 wt% aqueous solution of partly saponified PVA (having a degree of saponification of 88.4 mol% and an average degree of polymerization of 1700) was dissolved 10 wt% (based on partly saponified PVA) of glycerin. The resulting uniform solution (15 g) was cast onto a glass plate measuring 10 by 10 cm. The solution was dried by heating at 95°C to give a 20 μm thick film.

Comparative Example 4

A 2 wt% aqueous solution of acetoacetalized PVA (having a degree of acetoacetalization of 22 mol% and an average degree of polymerization of 480) was prepared. This solution (15 g) was cast onto a glass plate measuring 10 by 10 cm. The solution was dried by heating at 95°C to give a 20 μm thick film.

Comparative Example 5

A 2 wt% aqueous solution of vinyl alcohol-vinyl butyl ether copolymer (having a degree of etherifiation of 10 mol% and an average degree of polymerization of 1700) was prepared. This solution (15 g) was cast onto a glass plate measuring 10 by 10 cm. The solution was dried by heating at 95°C to give a 20 μm thick film.

Comparative Example 6

PVA (having a degree of saponification of 88.5 mol% and an average degree of polymerization of 500) was incorporated with 15 wt% of pentaerythritol, followed by mixing in a V-blender for 1 hour. The mixture was dried at 105°C for 1 hour under a nitrogen atmosphere. The water content in this compound measured by Karl-Fischer method was 0.7 wt%. After standing for 48 hours, the compound was made into film by melt extrusion at 220°C; however, it was impossible to produce satisfactory film because of foaming which, presumably, results from the dehydration of pentaerythritol.

Comparative Example 7

In a 2 wt% aqueous solution of PVA (having a degree of saponification of 98.5 mol% and an average degree of polymerization of 500) was dissolved 25 wt% (based on PVA) of pentaerythritol. The resulting uniform solution (15 g) was cast onto a glass plate measuring 10 by 10 cm. The solution was dried by heating at 95°C to give a 20 μm thick film.

Comparative Example 8

In a 2 wt% aqueous solution of PVA (having a degree of saponification of 98.5 mol% and an average degree of polymerization of 500) was dissolved 10 wt% (based on PVA) of partly formalized pentaerythritol. The resulting uniform solution (15 g) was cast onto a glass plate measuring 10 by 10 cm. The solution was dried by heating at 95°C to give a 20 μm thick film.

Comparative Example 9

In a 2 wt% aqueous solution of PVA (having a degree of saponification of 98.5 mol% and an average degree of polymerization of 500) was dissolved 25 wt% (based on PVA) of partly chlorinated pentaerythritol. The resulting uniform solution (15 g) was cast onto a glass plate measuring 10 by 10 cm. The solution was dried by heating at 95°C to give a 20 μm thick film.

The film samples obtained in Example 1 to 12 and Comparative Examples 1 to 9 were evaluated with respect to water solubility, moistureproofness, acid resistance, alkali resistance, and heat-sealability according to the following test methods. The results of the evaluation tests are shown in Table 1. It is apparently noted from Table 1 that the film samples in Examples are superior to those in Comparative Examples.

Test methods:

(1) Water solubility

Each sample film is cut in size of 2 by 2 cm. The cut piece is thrown into water at 10°C, 30°C, and 50°C.

(2) Moistureproofness

A glass petri dish, 38 mm in diameter and 50 mm deep, containing 5 g of anhydrous calcium chloride is tightly sealed with a sample film, and the petri dish is allowed to stand at 40°C and 80% RH for 24 hours. The weight increase due to water vapor permeation per 1 $m^2$ is measured.

(3) Acid resistance

To 90 of deionized water adjusted to pH 3 with hydrochloric acid is added 30 g of pulp powder to give a uniform pasty material. The film sample is placed in the pasty material and allowed to stand at 40°C and 80% RH for 20 days, with both sides of the film in complete contact with the pasty material. The film sample removed from the pasty material is examined for water solubility at 10°C.

(4) Alkali resistance

To 70 g of powdery anhydrous sodium carbonate is added 30 g of deionized water to give a wet powdery material. The film sample is allowed to stand in this wet powdery material, with both sides in complete contact with it, at 40°C and 80% RH for 20 days. The film sample removed from the wet powdery material is examined for water solubility at 10°C.

(5) Heat sealability

Using a heat sealer, the film is heat sealed at 140°C for 1 second.

Table 1

| Example No. | Water solubility | | | Moisture proofness g/m²·24 h (20 μm) | Water solubility(10°C) | | Heat seal-ability |
|---|---|---|---|---|---|---|---|
| | 10°C | 30°C | 50°C | | Acid resis-tance | Alkali resis-tance | |
| Example 1 | I | I | S | 44 | - | - | good |
| Example 2 | S | S | S | 318 | I | I | good |
| Example 3 | S | S | S | 96 | S | S | good |
| Example 4 | S | S | S | 114 | S | S | good |
| Example 5 | S | S | S | 98 | I | I | good |
| Example 6 | S | S | S | 121 | S | S | good |
| Example 7 | S | S | S | 92 | S | S | good |
| Example 8 | I | I | S | 69 | - | - | good |
| Example 9 | S | S | S | 98 | S | S | good |
| Example 10 | I | I | S | 84 | - | - | good |
| Example 11 | I | I | S | 38 | - | - | good |
| Example 12 | S | S | S | 110 | S | S | good |
| Example 13 | S | S | S | 88 | - | - | good |
| Example 14 | S | S | S | 126 | S | S | good |
| Example 15 | S | S | S | 72 | - | - | good |
| Comparative Example 1 | I | I | S | 708 | - | - | good |
| Comparative Example 2 | I | I | S | 1188 | - | - | good |
| Comparative Example 3 | S | S | S | 1584 | I | I | good |
| Comparative Example 4 | S | S | S | 557 | S | S | good |
| Comparative Example 5 | S | S | S | 672 | S | S | good |
| Comparative Example 6 * | - | - | - | - | - | - | - |

| | | | | | | | |
|---|---|---|---|---|---|---|---|
| Comparative Example 7 | I | I | S | 632 | I | I | good |
| Comparative Example 8 | I | I | S | 482 | I | I | good |
| Comparative Example 9 | I | I | S | 591 | I | I | good |

I : Insoluble    S : Soluble
The symbol "-" in acid resistance and alkali resistance indicates that the solubility test at 10°C was not carried out because completely saponified PVA was used.
* Film-making was impossible.

**Claims**

1 A moistureproof film of polyvinyl alcohol, which comprises a polyvinyl alcohol and 5 to 20 percent by weight, based on the polyvinyl alcohol, of pentaerythritol, said film having been produced by the casting method or the melt extrusion method using water.

2 A film as claimed in Claim 1, which further comprises a pentaerythritol derivative having the formula (1) or (2) in an amount of 5 to 20 percent by weight, based on the polyvinyl alcohol, in combination with the pentaerythritol.

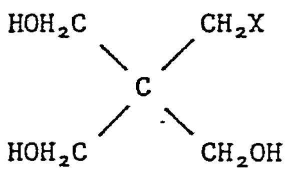
(1)

in which X is a halogen, R-COO- or -O-NO2, R being an alkyl,

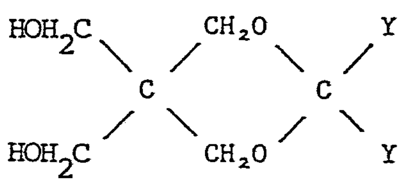
(2)

in which Y is hydrogen, an alkyl or acryl group, provided that an average substitution degree in each of X and Y is 15 or less mole percent based on the hydroxyl group of the derivative.

3 A film as claimed in Claim 1 or 2, in which the melt extrusion method has been carried out in the presence of 10 to 50 percent by weight, based on the total amount of the polyvinyl alcohol, the pentaerythritol and the pentaerythritol derivative, of water.

4 A film as claimed in Claim 1 or 2, in which said casting method has been conducted with water as a solvent.

5 A film as claimed in Claim 1, in which the pentaerythritol is dipentaerythritol, tripentaerythritol or a mixture of both.

6 A film as claimed in Claim 3, in which the extrusion has been conducted at an extruding temperature of 100° C or lower.

7 A film as claimed in Claim 1, in which the polyvinyl alcohol is soluble in water and is a polymer or copolymer thereof.

8 A process for producing a moistureproof film of polyvinyl alcohol, which comprises the steps of mixing a polyvinyl alcohol with 5 to 20 percent by weight, based on the polyvinyl alcohol, of a pentaerythritol in water and melt-extruding, or casting, the mixture thus formed to produce the film.

9 A process according to Claim 8, which further comprises adding a pentaerythritol derivative having the formula (1) or (2) in an amount of 5 to 20 percent by weight, based on the polyvinyl alcohol, in

combination with the pentaerythritol; to the mixture of polyvinyl alcohol and pentaerythritol.

10 A process according to Claim 8 or 9, in which the melt-extrusion method is carried out in the presence of 10 to 50 percent by weight, based on the total amount of the polyvinyl alcohol, the pentaerythritol and the pentaerythritol derivative, of water.

11 A process according to Claim 8 or 9, in which the casting method is conducted with water as a solvent.

12 A process according to any preceding claim in which the pentaerythritol is dipentaerythritol and/or tripentaerythritol.

13 A process according to Claim 9 in which the melt-extrusion is conducted at an extruding temperature of 100° C or lower.

14 A process according to any preceding claim in which the polyvinyl alcohol is soluble in water and is a polymer or a copolymer.